# EUROPÄISCHE PATENTSCHRIFT

(11) **EP 1 656 314 B1**
(45) Veröffentlichungstag und Bekanntmachung des Hinweises auf die Patenterteilung: **28.03.2007**
(21) Anmeldenummer: 04764399.4
(22) Anmeldetag: 23.08.2004
(51) Int. Cl.: B65G 59/02, B25J 15/00

(54) **GREIFSYSTEM FÜR IM VERBUND GESTAPELTE OBJEKTE**
GRABBING SYSTEM FOR CLOSELY STACKED OBJECTS
SYSTEME DE PREHENSION POUR OBJETS EMPILES SANS INTERSTICE

(30) Priorität: 23.08.2003 DE 10338793
(43) Veröffentlichungstag der Anmeldung: 17.05.2006
(73) Patentinhaber: Fraunhofer-Gesellschaft zur Förderung der angewandten Forschung e.V., 80686 München (DE)
(72) Erfinder: WOHLFAHRT, Andreas, 59348 Lüdinghausen (DE)
(74) Vertreter: Rösler, Uwe
(86) Internationale Anmeldenummer: PCT/EP2004/009419
(87) Internationale Veröffentlichungsnummer: WO 2005/019072

(56) Entgegenhaltungen:
- FR-A- 2 617 078
- US-A1- 2001 052 708

## Beschreibung

### Technisches Gebiet

Die Erfindung betrifft eine Vorrichtung und ein Verfahren zum Ergreifen für den Transport und erneutem Ablegen von fugenlos direkt aneinanderliegenden gestapelten Objekten mittels Greifer mit den Merkmalen der in den Oberbegriffen der Patentansprüche 1 und 4 genannten Gattungen.

Gegenstand der Erfindung ist ein Greifsystem, das zur Vereinzelung, zum Trennen, zum Transport, zur Neupositionierung oder zur Neuverbundbildung von Massengütem geeignet ist, die im Verbund gestapelt sind. Massengüter sind bspw. Packungen von Verbrauchsgütern, wie Schachteln, Kisten, Stückgütern und anderen Artikeln die bspw. rechteckförmig oder quadratisch oder auch in anders geformten Verpackungen in der Regel auf Europaletten mehrfach nebeneinander und übereinander dicht gestapelt sind. Probleme beim Ergreifen und Transportieren dieser Objekte entstehen dadurch, dass diese Objekte fugenlos direkt nebeneinander gestapelt sind und nur teilweise frei zugängliche Griffflächen bieten, so dass in der Regel bei fugenlos gestapelten Objekten auf Paletten keine frei zugänglichen Griffflächen vorhanden sind, die zueinander parallel liegen. Deshalb können Parallelbackengreifer, die zwei Greiferbacken in einem Winkel von 180°, also parallel zueinander besitzen, nicht verwendet werden, da diese die zu erfassenden und zu transportierenden Objekte nicht ergreifen können.

### Stand der Technik

Aus der EP 0.627 373 A1 ist ein Verfahren und eine Vorrichtung zur Aufnahme von Stückgut vorbekannt. Die Aufnahmevorrichtung gemäß EP 0 627 373 A1 weist zur Aufnahme eines Artikels einen Aufnahmetisch mit Förderbahn und ein Anstellorgan sowie einen Gegenhalterkopf auf. Beim Aufnahmevorgang des Artikels wird ein Andruckelement des Gegenhalterkopfes auf den hinteren Teil der Artikeloberseite gedrückt. Gleichzeitig wird das Anstellorgan von vorne unterhalb der vorderen Oberkante an den Artikel gepresst. Dann wird das Anstellorgan unter konstantem Andruck von oben bewegt. Dadurch wird der Artikel um die Gelenkachse des Andruckelementes gekippt. Durch die Kippbewegung entsteht eine Öffnung unter der vorderen Unterkante des Artikels, in die der Aufnahmetisch dann eingefahren werden kann. Der Aufnahmetisch unterfährt sodann den Artikel mit gegenläufigem Förderband und lädt den Artikel auf, während gleichzeitig das Anstellelement zurückgezogen wird. Mit dem Verfahren und der Vorrichtung nach der EP 0 627 373 A1 können paketförmige Artikel erfasst werden, ohne dass hinter dem Artikel jeweils ein Platz zum Ausschwenken desselben erforderlich ist. Es können daher mehrere hintereinander angeordnete Artikel ergriffen werden.

Aus der EP 0 548 545 A1 ist ein Verfahren und eine Vorrichtung zum Aufnehmen von Stückgut vorbekannt. Das Verfahren und die Vorrichtung dienen zum Aufnehmen von Stückgut von bzw. auf einer Unterlage mittels einem horizontal verfahrbaren Aufnahmetisch, wobei der Aufnahmetisch eine antreibbare Transporteinrichtung für das Gut und mindestens an seinem im Verfahrrichtung liegenden Ende ein rollen- bzw. umlenkrollenartiges Aufnahmeorgan besitzt. Oberhalb des Aufnahmetisches ist eine Aufnahmehilfsvorrichtung vorgesehen, wobei der Aufnahmetisch derart bis unmittelbar an eine vertikale Stirnfläche des aufzunehmenden Stückguts verfahren wird, bis das Aufnahmeorgan zur Anlage an diese Stirnfläche kommt, während die Aufnahmehilfsvorrichtung von oben auf das Gut abgesenkt wird, bis es dieses mit seiner Oberseite berührt. Dabei wird in einer Aufnahmephase das Aufnahmeorgan so angetrieben, dass das Stückgut durch Eingriff des Aufnahmeorgans an seiner Stirnseite gegen die Oberseite des Aufnahmetisches angehoben wird, während die Aufnahmehilfsvorrichtung bezüglich dem Stückgut so betätigt wird, dass sie auf das Gut ein die Anhebebewegung unterstützendes Drehmoment ausübt. In der Vorrichtung nach der EP 0 548 545 wird die Aufnahmekraft auf das Stückgut auf zwei Stellen verteilt und es lassen sich damit auch schwere Pakete aufnehmen. Der wirtschaftliche Einsatz von Vorrichtungen gemäß der EP 0 548 545 und EP 0 627 373 ist nur dann möglich, wenn eine ausreichende Betriebssicherheit bei bestehenden durch die Praxis diktierten Randbedingungen gewährleistet werden kann. Unter rein systemtechnischen Gesichtspunkten ist die Anwendung eines Universalgreifers, der alle möglichen Arten von Stückgütern greifen kann, zum Depalettieren von Stückgütern gegenüber der Verwendung mehrerer auf spezielle Produktklassen anwendbare einzelne Greifer zu bevorzugen. Der Vorteil der Verwendung von universellen Vorrichtungen führt jedoch zu einem erhöhten konstruktiven und finanziellen Aufwand. Unter Umständen ist auch mit Leistungseinbußen der einzelnen Vorrichtungen gegenüber speziellen Produkten zu rechnen. Die Anwendung eines einzigen universell einsetzbaren Greifersystems muss in Frage gestellt werden, wenn handhabungstechnische Aufgabenstellungen für Konsumgüter mit mehreren aber einfacheren Greiferlösungen wirtschaftlicher oder mit kleineren Zykluszeiten durchführbar sind. Die Anwendung von Greiferwechselsystemen kann jedoch nur dann sinnvoll sein, wenn die erforderlichen Greiferwechsel nicht zu häufig ausgeführt werden müssen.

Wie bereits vorstehend angeführt, können Greifsysteme mit Parallelbackengreifer nicht fugenlos und direkt nebeneinander gestapelte Objekte aufgreifen, wie sie bspw. bei Stück- und Massengütern gegeben sind, die auf Paletten gestapelt sind, da die Objekte über nur teilweise frei zugängliche Griffflächen verfügen und deshalb die Parallelbackengreifer keine parallel liegenden Griffflächen vorfinden. Diese weit verbreiteten Parallelbackengreifer können nicht angewendet werden, da die Normalkomponenten der frei zugänglichen Flächen keine Vektorkomponenten gegen die Gravitationskraft aufweisen. Es ist deshalb heute üblich, bei auf Paletten fugenlos gestapelten Objekten Sauggreifer einzusetzen, die durch Ansaugen der oberen Fläche des Objektes die erforderlichen Greifkräfte in das zu ergreifende und zu transportierende Objekt einleiten. Diese Saugkraftgreifer besitzen jedoch nur ein beschränktes Anwendungsgebiet, da sie einen hohen Energieverbrauch zur Vakuumerzeugung besonders bei den häufig in der Praxis auftretenden Undichtigkeiten an den Saugerdichtlippen erfordern, ferner einen hohen Geräuschpegel und Staubaufwirbelungen verursachen und darüber hinaus völlig ungeeignet sind für Oberflächen von Objekten, die porös und damit luftdurchlässig sind oder auch für Oberflächen die Durchbrüche aufweisen, durch die Luft angesaugt wird.

Der DE 100 57 690 A1 ist ein Verfahren sowie eine Vorrichtung zum automatischen Abstapeln, Vereinzeln und Zuteilen von Werkstücken entnehmbar, wobei die einzelnen Werkstücke mit Hilfe eines Klauengreifers derart erfasst werden, dass am Klauengreifer vorgesehene Klauenspitzen in das jeweils handzuhabende Werkstück zumindest geringfügig eindringen, um einen sicheren Kraft- bzw. Klemmschluss mit dem jeweils zu handhabenden Werkstück einzugehen. Ein derartiges Verfahren ist jedoch lediglich an robusten Werkstücken, wie bspw. Kanthölzern, praktikabel einsetzbar. Handelt es sich jedoch bei den zu handhabenden Objekten um Objekte, deren Objektoberfläche unbeeinträchtigt bleiben soll, so eignet sich das in der vorstehend beschriebenen Druckschrift offenbarte Verfahren nicht.

Der FR 2617 978,ist eine Vorrichtung zum Ergreifen, Transport und einer erneuten Ablage von fugenlos gestapelten Objekten mittels eines Greifers zu entnehmen, wobei die Objekte über frei zugängliche, nicht parallel zueinander liegende Griffflächen verfügen, und der Greifer wenigstens zwei Greiferbacken aufweist, dessen erste Greiferbacke auf eine frei zugängliche erste Fläche in Form einer Oberfläche des Objektes und dessen zweite Greiferbacke auf eine zweite Fläche in Form einer weiteren frei zugänglichen Seitenfläche des Objekts aufgelegt ist, wobei die erste und die zweite Greiferbacke in einem Winkel zueinander angeordnet sind. Wenigstens eine der beiden Greiferbacken verfügt über eine Unterdruckeinrichtung zum Anhaften des zu ergreifenden Objektes an der jeweiligen Greiferbacke.

### Darstellung der Erfindung

Der Erfindung liegt deshalb die Aufgabe zugrunde, eine Vorrichtung und ein Verfahren für ein Greifsystem zur Automatisierung des Aufbaus und Handhabens von gestapelten Objekten, die direkt ohne Zwischenraum Wand an Wand aneinanderliegen, zu schaffen, wobei für die Handhabung von gestapelten Massengütern nur ein geringer konstruktiver und finanzieller Aufwand erforderlich sein soll und ferner beim Entstapeln von Objekten nur eine geringe Zeitdauer für die Durchführung des Zyklusses für alle gestapelten

Objekte benötigt werden soll und damit ein wirtschaftlicher Einsatz der Vorrichtung und des Verfahrens ermöglicht wird, darüber hinaus soll bei dem Greifsystem auf eine Verwendung von mit Unterdruck arbeitenden Greiferbacken verzichtet werden können und die Vorrichtung des Greifersystems mit dem gleichen Greifer sowohl für das Entstapeln wie auch für das erneute Ablegen bzw. das erneute Stapeln des Objektes benutzt werden können.

Diese Aufgaben werden erfindungsgemäß durch die in den kennzeichnenden Teilen der Patentansprüche 1, 2, 3, 4 und 5 angegebenen Merkmale gelöst. Vorteilhafte Weiterbildungen der Erfindungsgegenstände sind in den Merkmalen der Unteransprüche 6-33 gekennzeichnet.

Die Vorteile der Erfindung liegen insbesondere darin, dass das Greifsystem über einen Greifer verfügt, dessen Greiferbacken zueinander bspw. in einem Winkel von 90° angeordnet sind. Da es bspw. bei quaderförmigen vollflächig auf ihrer Grundfläche aufliegenden Objekten, wie Schachteln, keine zwei zugänglichen gegenüberliegenden Quaderseiten gibt, wenn die quaderförmigen Stückgüter fugenlos nebeneinander z. B. auf einer Europalette gestapelt sind und damit keine Spalte zwischen den Stückgütern existierten, kann mit dem erfindungsgemäßen Greifer dennoch ein Vereinzeln, Trennen, Transportieren und eine erneute Ablage erfolgen, indem eine erste Greiferbacke auf einer frei zugänglichen ersten Fläche in Form einer Oberfläche des Stückgutes aufliegt und die zweite Greiferbacke auf einer zweiten Fläche in einem Winkel von 90 Grad in Form einer weiteren frei zugänglichen Seitenfläche des Objekts aufliegt. Dabei ist die erste Greiferbacke mit einem Druck zum Erzielen des objektspezifischen Haftreibschlusses auf die Oberfläche aufgedrückt, während die zweite Greiferbacke des Greifers nur lose an der weiteren frei zugänglichen Seitenfläche des Objekts aufgelegt worden ist.

Der Greifer ist dabei bspw. an dem Arm eines Handhabungsautomaten oder eines Roboters derart beweglich angeordnet, dass die erste und zweite Greiferbacke des Greifers als Kippvorrichtung für das zu transportierende Objekt dienen können. Vor Beginn des Transportes des Stückgutes wird dann synchron mit den beiden Greiferbacken des Greifers, die auf dem Stückgut aufliegen, das Stückgut selbst um 90 Grad gedreht, so dass nach der Drehung die vorher auf einer weiteren frei zugänglichen Seitenfläche anliegende zweite Greiferbacke unter der Seitenfläche zu liegen kommt, die nach der Drehung die neue Standfläche des Stückgutes bildet. Durch diese Kippung um 90 Grad des zu ergreifenden und zu transportierenden Stückgutes ist es möglich mit dem Greifer bzw. der zweiten Greiferbacke die Normalkomponente der Gravitationskraft des Stückgutes aufzunehmen und das Stückgut zu vereinzeln, zu trennen und zu transportieren. Das Prinzip, zwei in einem Winkel von bspw. 90 Grad zueinander stehende Greiferbacken des Greifers in der erfindungsgemäßen Kombination mit dem Kippen der beiden Greiferbacken zusammen mit dem Objekt in eine neue Schwerpunktlage zu bringen, ermöglicht es, Verpackungen von Verbrauchsgütern, anderen Stück- und Massengütem und dgl., die fugenlos jeweils dicht aneinander in der Höhe wie in der Breite gestapelt sind, zu ergreifen und zu transportieren, obwohl keine Greifer verwendet werden, die an zwei parallel liegenden und damit im Winkel von 180 Grad zueinander stehenden Seitenflächen des Stückgutes angreifen. Der geschilderte erfindungsgemäße Greifer besitzt eine einfache Konstruktion und kann ohne großen finanziellen Aufwand hergestellt werden. Die Automatisierung des Greifsystems und damit auch des Transports mittels eines Handhabungsautomatens oder Roboters ermöglicht eine geringe Zeitdauer für die Durchführung der Zyklen dieses Greifverfahrens, nämlich des Vereinzelns, Trennens, Transportes, der Neupositionierung oder der Neuverbundbildung des Objektes. Es wird damit ein wirtschaftlicher Einsatz des erfindungsgemäßen Greifsystems ohne Verwendung von Greifern, die mit Unterdruck arbeiten, möglich und es kann zusätzlich/ gleichzeitig noch mit dem Greifsystem nicht nur das Entstapeln von Verbrauchsgütern z. B. auf Europaletten erfolgen, sondern eine gleichzeitige Neupositionierung in Regalen oder eine Verbundbildung in Regalen oder in anderen Ablageorten.

Die vorstehend geschilderte erste Ausführung des erfindungsgemäßen Greifsystems geht davon aus, dass lediglich eine Greiferbacke, nämlich die erste in einer Ebene liegende Greiferbacke auf der Oberfläche des zu ergreifenden Objektes kraftschlüssig aufliegt, während die zweite Greiferbacke auf einer weiteren frei zugänglichen Seitenfläche des Objekts nur lose aufliegt. In einer zweiten Ausführungsform des erfindungsgemäßen Greifsystems, das ebenfalls aus einer ersten und einer zweiten Greiferbacke besteht, die zueinander während der Greifdauer in einem definierten Winkel angeordnet sind, ist sowohl die erste Greiferbacke des Greifers auf eine erste Fläche in Form einer frei zugänglichen Oberfläche angedrückt wie auch die zweite Greiferbacke des Greifers auf eine zweite Fläche in Form einer zweiten frei zugänglichen Seitenfläche des Objekts angedrückt, wobei sowohl die erste Greiferbacke wie auch die zweite Greiferbacke reibschlüssig, d. h. mit einer Kraft bis zum Erzielen des objektspezifischen Haftreibschlusses zwischen den Greiferbacken und dem zu ergreifenden Objekt angepresst sind, so dass sich durch Haftreibschluss eine Klemmung zwischen Objekt und Greiferbacken ergibt. Die erste Greiferbacke und die zweite Greiferbacke werden zu den ihnen jeweils gegenüberliegenden Oberflächen des Objekts verfahren und aufgepresst. Die zum Ergreifen der zu transportierenden Objekte erforderlichen Kräfte werden dabei reibschlüssig von der ersten und zweiten Greiferbacke des Greifers aufgebracht. Die minimale erforderliche Größe der Andruckkräfte ergibt sich aus dem Reibwert zwischen dem Objekt und den Greiferbacken-flächen und der Masse des zu transportierenden Objekts.

In einer dritten Ausführungsform des erfindungsgemäßen Greifsystems wird nun die zweite Ausführungsform der Erfindung, bei der sowohl die erste als auch die zweite Greiferbacke reibschlüssig auf dem zu transportierenden Objekt aufliegen und Klemmkräfte einleiten, mit dem bei der ersten Ausführungsform des erfindungsgemäßen Greifsystems bereits geschilderten Kippvorgang des Objekts vor Beginn des Transportes in erfinderischer Weise kombiniert. D. h., die erste und die zweite Greiferbacke des Greifers werden bei der dritten Ausführungsform reib- und formschlüssig auf bspw. die Oberfläche und eine frei zugängliche weitere Seitenfläche des Objekts aufgedrückt und dann wird vor Beginn des Transportvorganges für die Objekte das Objekt um diejenige Grundflächenkante des Objekts gedreht, die eine frei zugängliche Seitenfläche des Objekts mit der dort aufliegenden zweiten Greiferbacke gegen die Unterlage begrenzt und damit nach dem Drehen z. B. um 90 Grad die zweite Greiferbacke unter dem Objekt auf der neuen Standfläche des Objektes liegt und deshalb die Komponente der Gravitationskraft mit Hilfe der zweiten Greiferbacke des Greifers aufnimmt.

In der dritten Ausführungsform des erfindungsgemäßen Greifsystems sind die in einer Ebene liegenden Greifflächen der Greiferbacken als Riemen ausgebildet, der mittels eines Riemenantriebs verfahrbar ist. Die verfahrbaren Riemenflächen der ersten und zweiten Greiferbacken erzeugen durch die verfahrbaren Greiferbackenflächen einen Klemmmechanismus für das zu ergreifende Objekt in der Art, dass die umlaufenden Riemen auf den jeweiligen Innenseiten der beiden Greiferbackenflächen von außen nach innen, d. h. in Richtung der Innenwinkelkante des von den Greiferbacken gebildeten definierten Winkels aufeinander zu laufen. Durch die form- und reibschlüssig aufliegenden bewegten Riemengreiferflächen der Greiferbacken 1 und 2 werden Kraft- bzw. Reibkomponenten in Richtung der Bewegungsrichtung der Riemen erzeugt, die ein besonders schonendes und wirksames Aufnehmen der fugenlos nebeneinander gestapelten Objekte, Schachteln und dgl. ermöglichen. Besonders bei turmartig aufeinander gestapelten Objekten verspricht das Verfahren und die Vorrichtung gemäß der dritten Ausführungsform des Greifsystems Ergebnisse, die ein Umkippen des bereitgestellten Turms aus bspw. Verbrauchsgütern auf diese Weise verhindern. Die als verfahrbare Riemen ausgebildete Greiferfläche bei den Greiferbacken ist in einer Ebene angeordnet und kann aus einem oder auch aus mehreren Flachriemen bestehen. Darüber hinaus kann man für gestapelte Objekte mit nicht einwandfreier ebener Oberfläche bzw. Seitenfläche die Flachriemen auch als Rundriemen ausführen und ebenfalls ein oder mehrere Rundriemen nebeneinander in einer Fläche anordnen. Dabei ist es vorteilhaft, jedem Riemen der Greiferbackenfläche jeweils eine einzelne Drehmomentbegrenzung z. B. in Form einer eigenen Rutschkupplung zuzuordnen, um zahlreiche Angriffspunkte für die Haftung des Objekts an den Greiferbacken zu erzielen.

Ein weiterer Vorteil des erfindungsgemäßen Greifersystems besteht darin, dass die Greiferbackenflächen der ersten und der zweiten Greiferbacke in ihrer Größe veränderbar ausgeführt sind. So lässt sich bspw. die Länge der einen Greiferbacke durch Verfahren der in einem definierten Winkel zu ihr angeordneten anderen Greiferbacke in ihrer Längsrichtung verändern. Damit lassen sich die Flächen der Greiferbacken des Greifers an unterschiedliche Ausmaße der Seiten und Oberflächen der zu ergreifenden Objekte optimal anpassen.

### Kurze Beschreibung der Erfindung

Nachstehend wird die Erfindung anhand von Ausführungsbeispielen und von Zeichnungen noch näher erläutert.

Es zeigen:
- Fig. 1 und 2: In einer ersten Ausführungsform des erfindungsgemäßen Greifsystems eine Prinzip- und Teildarstellung eines Greifers mit zwei in einem 90 Grad-Winkel zueinander angeordneten Greiferbacken, wobei nur ein Greiferbacke mit Reibhaftung auf einer Fläche des Objekts aufliegt,
- Fig. 3: in einer zweiten Ausführungsform des erfindungsgemäßen Greifersystems eine Prinzip- und Teildarstellung eines Greifers mit zwei in einem 90 Grad-Winkel zueinander angeordneten Greiferbacken, wobei beide Greiferbacken mit Reibhaftung auf dem zu transportierenden Objekt aufliegen, und
- Fig. 4: in einer dritten Ausführungsform des erfindungsgemäßen Greifersystems eine Prinzip- und Teildarstellung eines Greifers, dessen beide in einem Winkel von 90 Grad zueinander angeordneten Backen einem Klemmmechanismus aus verfahrbaren Riemen auf der Greiferbackeninnenfläche aufweisen und
- Fig. 5: ebenfalls in der dritten Ausführungsform des erfindungsgemäßen Greifersystems in Prinzip- und Teildarstellung einen Greifer mit zwei Greiferbacken, die durch Verfahren der Backen gegeneinander unterschiedliche Größen der Greiferflächen wie bspw. der Länge erzeugen.

### Wege zur Ausführung der Erfindung, gewerbliche Anwendbarkeit

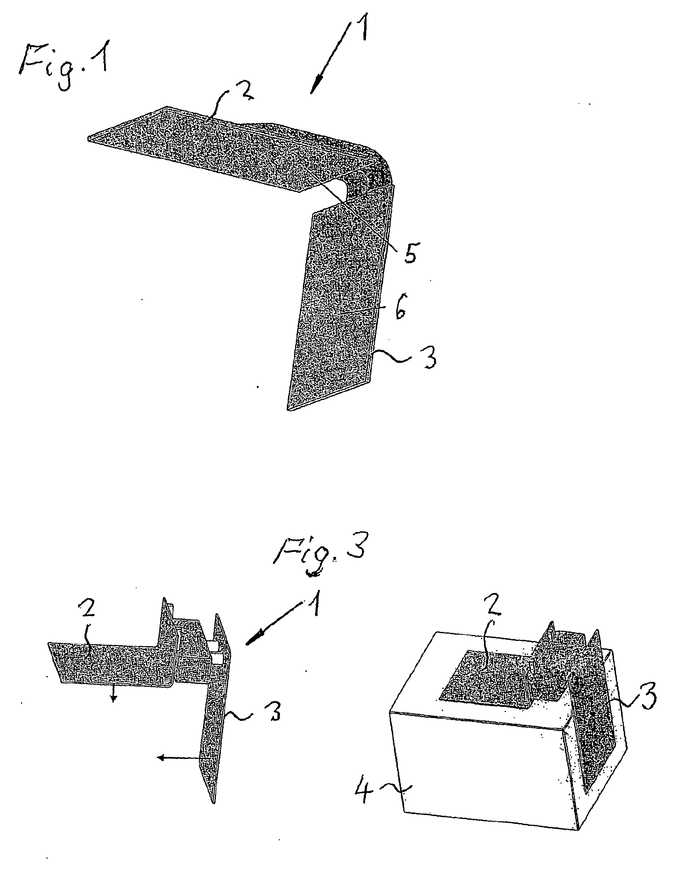

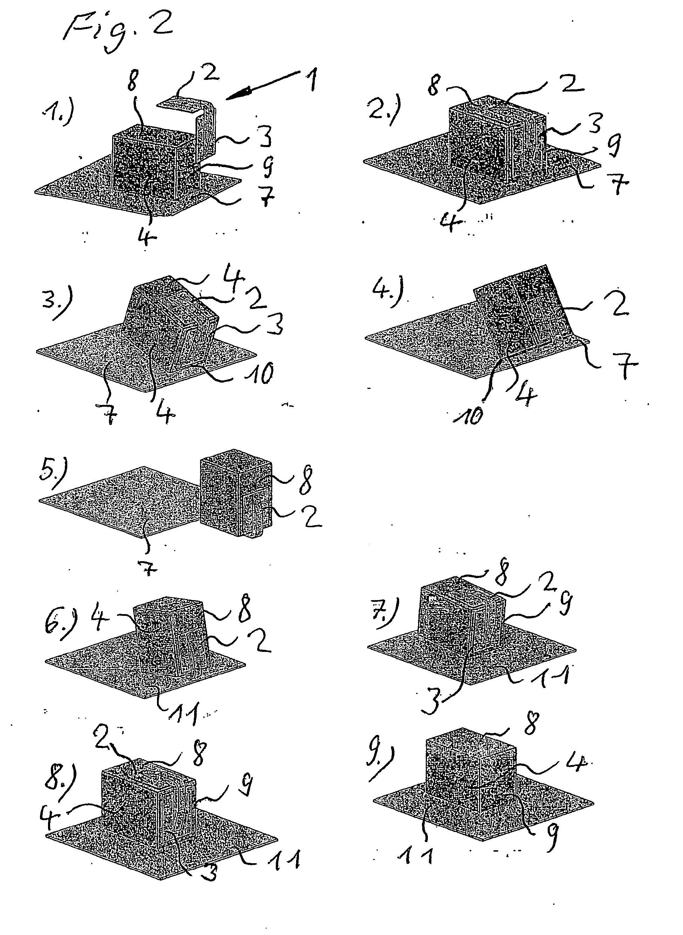

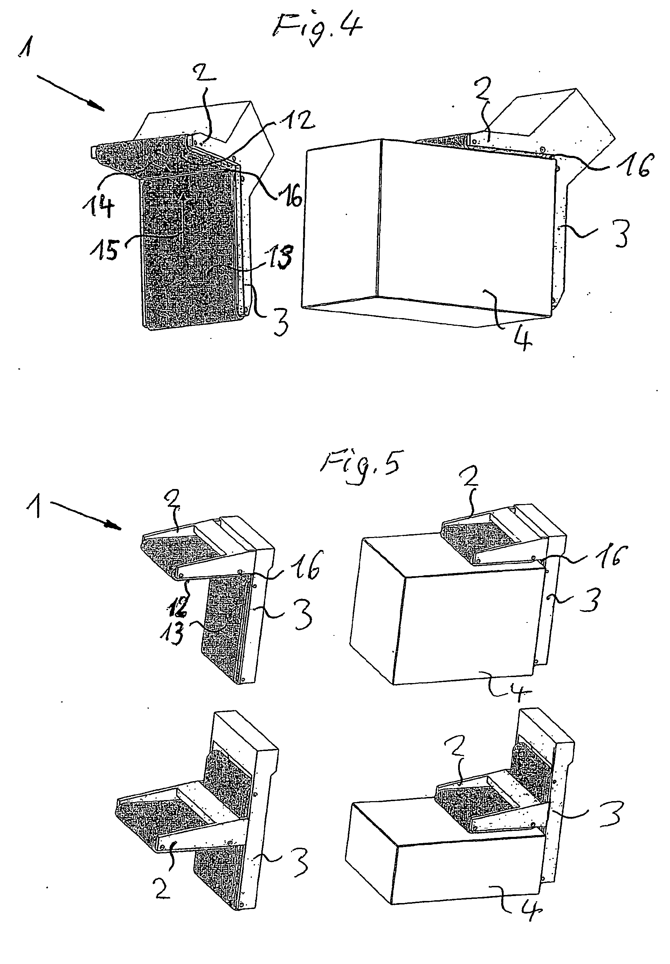

Aus der Figur 1 ist in einer Prinzip- und Teildarstellung ein Greifer 1 einer Vorrichtung des erfindungsgemäßen Greifersystems ersichtlich, der geeignet ist, das Entstapeln für den Transport und die erneute Ablage von fugenlos direkt nebeneinander liegenden und gestapelten Objekten durchzuführen. Diese Objekte verfügen über nur teilweise frei zugängliche Griffflächen und die frei zugänglichen Griffflächen liegen dabei nicht zueinander parallel, sondern in einem Winkel kleiner 180 Grad, also nicht zueinander parallel. Der Greifer 1 nach den Figuren 1 und 2 sowie die noch zu schildernden Greifer nach den Figuren 3, 4 und 5 sind jeweils Teil einer Vorrichtung zum Bewegen des Greifers, die jedoch in den Figuren 1 - 5 nicht dargestellt und in der Beschreibung nicht näher beschrieben ist. Diese Vorrichtung zum Bewegen des Greifers beinhaltet bspw. einen Arm eines Handhabungsautomaten oder eines Roboters und ermöglicht es die Greifer gemäß den Figuren 1 - 5 in alle drei Koordinatenrichtungen zu bewegen und zusätzlich eine Drehung bzw. ein Kippen des Greifers um eine Drehachse durchzuführen. Zu den nicht dargestellten und beschriebenen Handhabungsautomaten bzw. Robotern ist auch die Steuerung für den Handhabungsautomaten und den Roboter nicht beschrieben und nicht dargestellt.

Die von dem Greifer 1 zu ergreifenden und zu transportierenden Objekte 4, siehe dazu Fig. 2 sind in der Regel als Verbrauchsgüter, Massengüter, Stückgut oder als andere Artikel des Bedarfs des gewerblichen und industriellen Bedarfs definiert. Die Objekte haben in der Regel die Gestalt von rechteckförmigen, quaderförmigen oder anderen Formen, die greifbare Flächen besitzen und sind regelmäßig auf Europaletten in mehreren Lagen übereinander gestapelt. Diese Stapelung der Objekte erfolgt fugenlos direkt aneinander liegend und die Objekte weisen bei dieser Stapelung ohne Fugen nur teilweise frei zugängliche Griffflächen für einen Greifer auf und insbesondere ist zum Ergreifen und Transportieren dieser Objekte nachteilig, dass bei fugenlosem nebeneinander Aufschichten sowohl in der Breite wie in der Höhe keine parallel zueinander liegende Griffflächen vorhanden sind. Aus diesem Grunde können die üblicherweise eingesetzten Parallelbackengreifer, die zwei Greiferbacken in einem Winkel.von 180 Grad parallel zueinander stehend besitzen, nicht zum Ergreifen und Transport derartig gestapelter Güter eingesetzt werden. Das Merkmal "fugenlos" ist derart definiert, dass unter fugenlos gestapelten Objekten auch diejenigen gestapelten Objekte zu verstehen sind, die zwischen direkt aneinander liegenden Flächen kleine Spalte aufweisen, die jedoch zu klein sind, um in diese kleinen Spalten eine Greiferbacke einfahren zu können. Bei Objekten, die links und rechts fugenlos an je ein weiteres solches Objekt angrenzen, steht zum Ergreifen und Transportieren nur die Oberfläche des Objekts und die mit einem Winkel von z. B. 90 Grad bei Kisten und Schachteln angrenzende weitere Seitenfläche zum Ergreifen und Transportieren zur Verfügung. Bei Objekten, die einen Stapel in der Ecke begrenzen, stehen maximal drei Flächen zur Verfügung, nämlich die der Oberfläche und die von zwei weiteren Seitenflächen, die bei Kisten und Schachteln in einem 90 Grad-Winkel zueinander stehen, wobei keine der vorstehend beschriebenen Flächen parallel zu einer anderen Fläche liegt. Es kann deshalb die Gravitationskraft der zu ergreifenden und zu transportierenden Objekte mit einem Parallelbackengreifer nicht durch eine Gegenkraft kompensiert werden.

Das Wirkprinzip des Greifers nach der ersten und der dritten Ausführungsform des Greifsystems nach der Erfindung besteht in der Kombination der Merkmale, den Greifer und damit die erste und die zweite Greiferbacke als Kippvorrichtung um eine Drehachse zur Drehung des zu greifenden und zu transportierenden Objekts zu verwenden, um so den Schwerpunkt des zu transportierenden Objekt über eine Greiferbacke des Greifers zu verlagern, dabei ist es erfindungswesentlich, dass die Drehung des Objekts synchron zusammen mit dem Greifer vor Beginn des beabsichtigten Transports des Objekts erfolgt, wobei die Erfindung nur ausführbar ist, weil das Ergreifen des Objekts mit zwei zueinander in festen Winkel angeordneten Greiferbacken in Kombination mit dem Kippen des Objekts vor Beginn des Transports des Objekts ausgeführt wird.

Die Innenseite 5 der Greiferbackenfläche des ersten Greiferbacken 2 und die Innenseite 6 der Greiferbackenfläche des zweiten Greiferbackens 3 verlaufen jeweils in einer Ebene, dies gilt auch für die Innenseiten der Greiferbackenflächen der Greifer nach dem zweiten und dem dritten Ausführungsbeispiel, die später noch geschildert werden. Die Kraft, mit der die erste Greiferbacke bei dem ersten Ausführungsbeispiel auf die Oberfläche des Objekts gedrückt wird - bei dem zweiten und dritten Ausführungsbeispiel werden zusätzlich zur ersten Greiferbacke auch die zweiten Greiferbacken mit Kraft auf das Objekt gedrückt - diese dazu erforderliche Größe der Kraft ist von dem Reibwert zwischen der jeweiligen Innenseite der Greiferbackenfläche und dem Objekt und zusätzlich noch von der Masse des zu transportierenden Objekts abhängig. Die Beläge der Innenseiten 5 und 6 der Greiferbackenflächen der ersten Greiferbacke 2 und der zweiten Greiferbacke 3 werden deshalb derart gewählt, dass die je nach Anwendung unterschiedlich ausgewählten Werkstoffe der Innenseiten einen hohen Reibwert aufweisen. Als Werkstoff kann bspw. Gummi, Schaumstoff oder jeder andere Werkstoff verwendet werden, der einen hohen Reibwert aufweist.

Die Greiferbackenflächen 5 und 6 des ersten Greiferbacke 2 und der zweiten Greiferbacke 3 müssen dabei nicht als zusammenhängende Fläche ausgeführt sein, es ist vielmehr möglich, die Greiferbackenflächen in Form von Einzelfingern der Greiferbacke auszuführen, wobei diese Einzelfinger, die gabelartig verlaufen können, jeweils wiederum in einer Ebene verlaufen. Derartige mit Einzelfingern ausgeführte Greiferbacken können bei entsprechender konstruktiver Ausführung mit ihren einzelnen Gabelfingern auch ineinander gesteckt werden und auf diese Weise ein Winkel zwischen den beiden Greiferbacken erzeugt werden. Die erste Greiferbacke 2 und die zweite Greiferbacke 3 des Greifers 1 sind während der Greifdauer des Objekts 4 zueinander in einem definierten starren Winkel angeordnet. Die Greifdauer ist dabei definiert aus den Abschnitten Vereinzelung, Trennung, Transport und Neupositionierung oder Neuverbundbildung des Objekts 4. D. h., dass der Winkel zwischen der ersten Greiferbacke 2 und der zweiten Greiferbacke 3 während der Prozessführung der vorstehend geschilderten Teilabläufe stets unverändert angeordnet ist. Bei den in der Regel quaderförmigen oder rechteckförmigen Objekten, die auf den Europaletten gestapelt werden, wird deshalb der Winkel zwischen der ersten Greiferbacke 2 und der zweiten Greiferbacke 3 stets 90 Grad betragen. Prinzipiell lassen sich jedoch beliebige definierte Winkel zwischen den Greiferbacken 2 und 3 durch die Veränderbarkeit der Stellung der ersten Greiferbacke 2 und der zweiten Greiferbacke 3 zueinander einstellen, so dass der Winkel zwischen den Greiferbacken des Greifers 1 auf andere Winkel justiert werden kann, wenn die Objekte spitzwinklige oder stumpfwinklig angeordnete Griffflächen aufweisen. Die Verstellbarkeit des Winkels zwischen Greiferbacke 2 und Greiferbacke 3 lässt sich mit verschiedenen hier nicht dargestellten Mitteln konstruktiv ausführen, unter anderem auch dadurch, das die jeweiligen rückseitigen Halter der Greiferbacken 2 und 3 an einer gemeinsamen Achse verstellbar und justierbar geführt sind.

Mittels der ersten Ausführungsform des erfindungsgemäßen Greifsystems nach Figur 1 wird nun anhand der in der Figur 2 gezeigten Positionen 1.) bis 9.) die Prozessführung in Abschnitten bzw. Teilabläufen während des Greifens, Transportierens und erneuten Ablegens geschildert. In der Position 1.) ist ein Objekt 4 dargestellt, das in der Realität selbstverständlich nicht alleine sondern fugenlos nebeneinander links und rechts mit benachbarten weiteren gleichen Objekten bspw. auf einer Europalette aufgebaut ist. Als Grifffläche des Objekts stehen dann nur die Oberfläche 8 des Objekts und eine weitere frei zugängliche Seitenfläche 9 des Objekts für den Greifer 1 zur Verfügung. Das Objekt 4 ruht auf einer Unterlage 7, die bspw. die Platte einer Europalette sein kann, in der Mehrzahl der Fälle aber eine Ebene darstellt, die durch die darunter liegende Schicht an Objekten gebildet wird, die in diesem Ausführungsbeispiel eine rechteckige Form und gleiche Größe besitzen, wie dies bei Verbrauchsgütern, Massengütem und Stückgütern die Regel ist. Die Unterlage 7 und das Objekt 4 in der Figur 2 sind also nur symbolisch dargestellt, um die Funktion der Vorrichtung des erfindungsgemäßen Greifsystems und deren Prozessablauf zu erläutern. Nicht dargestellt ist ebenfalls wie bereits erwähnt die Vorrichtung zum Bewegen des Greifers 1 bspw. mit einem Arm eines Handhabungsautomaten oder eines Roboters, der zur Bewegung des Greifers 1 und auch des Objektes 4 mittels des Greifers dient.

In der Position 1.) wird der Greifer 1 mit seiner ersten Greiferbacke 2 auf eine erste Fläche in Form einer frei zugänglichen Oberfläche 8 des Objekts und der zweite Greiferbacke 3 auf eine zweite Fläche in Form einer weiteren frei zugänglichen Seitenfläche 9 des Objekts 4 aufgelegt. Dabei liegt die zweite Greiferbacke 3 nur lose ohne Druck auf der frei zugänglichen Seitenfläche 9 auf, während die erste Greiferbacke 2 auf die frei zugängliche Oberfläche 8 bis zum Erzielen des objektspezifischen Haftreibschlusses der Innenseite 5 der Greiferbackenfläche gedrückt wird.

In den Positionen 3.) und 4.) wird vor Beginn des Transportes des Objektes 4 durch den Greifer 1 ein Kippvorgang mit Drehung um eine Achse des Objekts ausgeführt. Die erste Greiferbacke 2 und die zweite Greiferbacke 3 dienen dabei als Kippvorrichtung für das Objekt 4. Die Drehung des Objekts 4 erfolgt um diejenige Grundflächenkante 10 des Objekts 4, die die frei zugängliche Seitenfläche 9 des Objekts mit der dort aufliegenden zweiten Greiferbacke 3 gegen die Unterlage 7 begrenzt. Damit liegt nach der Drehung die zweite Greiferbacke 3 unter der neuen Standfläche des Objekts 4, d. h. die Greiferbacke 3 nimmt die Gewichtskraft des Objekts formschlüssig auf und ermöglicht es auf diese Weise das Objekt einfach zu transportieren. Die Grundflächenkante 10 des Objekts verbleibt während der Drehung auf der Unterlage 7 und wirkt so abstützend während des Drehvorganges, dadurch werden die Gewichtskräfte während der Drehung über die Grundflächenkante 10 in die Unterlage abgeleitet. Die gemeinsame Drehung von Greifer 1 und Objekt 4 wird dabei durch entsprechende Synchronisation der beteiligten Bewegungsachsen des verwendeten Handhabungsautomaten oder Roboters erreicht, was hier jedoch nicht dargestellt ist.

In der Position 5.) der Figur 2 wird das Objekt 4 mittels des Greifers 1 von der Unterlage 7 entfernt und zu der neuen Unterlage 11 transportiert. Auf der neuen Unterlage 11, die ein Regalboden oder dort bereits gestapelte andere gleiche Objekte 4 sein kann, oder eine andere Palette, ein anderer Behälter o. dgl. sein kann, wird das Objekt 4 erneut positioniert. Das Objekt wird dann in der Position 7.) wieder gedreht, d. h. zurückgedreht in die alte Ursprungsstellung beim Beginn des Ergreifens des Objektes 4 und schließlich in der Position 8.) wiederum auf der neuen Unterlage 11 abgelegt. Anschließend wird wie in Position 9.) angedeutet, der Greifer 1 wieder von dem Objekt 4 entfernt. Damit ist anhand des in der Figur 2 gezeigten Schemas die Prozessführung des erfindungsgemäßen Greifsystems während der Greifdauer des Objekts durch den Greifer in den Teilabläufen, Vereinzeln, Trennen, Transportieren und Neupositionieren oder Neuverbundbilden dargelegt worden. Diese Funktionen des erfindungsgemäßen Greifsystems gelten auch eingeschränkt für die zweite Ausführungsform des Greifsystems und vollständig für die dritte Ausführungsform des Greifsystems und werden deshalb dort nur teilweise oder nicht nochmals geschildert.

In einer zweiten Ausführungsform des erfindungsgemäßen Greifsystems für mittels Verbund gestapelter Objekte wie bspw. Schachteln unterscheidet sich der Erfindungsgegenstand zu dem Ausführungsbeispiel des Greifsystems in der ersten Ausführungsform dadurch, dass der Greifer 1 zwar wie bei der ersten Ausführungsform eine erste Greiferbacke 2 und eine zweite Greiferbacke 3 aufweist, die zueinander bspw. in einem Winkel von 90 Grad stehen und an dem Arm eines hier nicht dargestellten Handhabungsautomaten oder Roboters zur Bewegung befestigt sind, jedoch werden bei dem zweiten Ausführungsbeispiel die erste Greiferbacke 2 und die zweite Greiferbacke 3 gleichzeitig auf die beiden frei zugänglichen Flächen mit einem Druck bis zum Erzielen des objektspezifischen Haftreibschlusses zwischen den Greiferbacken und dem Objekt aufgedrückt. Es wird also nicht nur die erste Greiferbacke 2 wie bei dem ersten Ausführungsbeispiel aufgepresst sondern auch die zweite Greiferbacke 3. Durch die gleichzeitige Zustellung der ersten Greiferbacke 2 und der zweiten Greiferbacke 3 wird eine Reibung zwischen der Oberfläche 8 des Objekts und einer weiteren frei zugänglichen Seitenfläche 9 des Objekts derart erzeugt, dass reibschlüssige Klemmkräfte zwischen dem Objekt 4 und dem Greifer 1 entstehen, so dass das zu ergreifende Objekt für handhabungstechnische Aufgaben, wie z. B. dem Transport im Greifer fixiert ist. Bei Vorliegen von günstigen Randbedingungen, wie einem ausreichendem Reibwert zwischen den Greiferbacken und dem Objekt, einem nicht zu hohen Gewicht des Objektes 4 und einer ausreichenden Stabilität, d. h. Festigkeit und Nichtnachgeben, d. h. einer geringen Elastizität der Oberfläche 8 und weiterer frei zugänglicher Seitenflächen 9 des Objekts 4 ist ein Anheben des Objekts 4 ohne weitere Maßnahmen und Hilfsmittel möglich. Die erste Greiferbacke 2 und die zweite Greiferbacke 3 werden bei der Ausführungsform 2 des Greifsystems bspw. in senkrechter Richtung zu den den Greiferbacken jeweils gegenüberliegenden Flächen zugestellt, also die Oberfläche 8 und eine weitere frei zugängliche Seitenfläche 9 des Objekts.

Bei der Ausführungsform 2 des Greifsystems erfolgt normalerweise kein Kippen und Drehen des Objekts 4 für den Transport, da bei Vorliegen der entsprechenden Voraussetzungen wie vorstehend geschildert eine Schwerpunktverlagerung auf eine der Greiferbacken nicht erforderlich ist, da ein Klemmmechanismus zwischen den beiden Greiferbacken das Objekt allein festhält. Die Anforderungen durch die erste Greiferbacke 2 und die zweite Greiferbacke 3 an die Festigkeit der Flächen des zu greifenden Objekts 4 sind jedoch relativ hoch. Ab einem gewissen Gewicht des Objektes 4 kommt es zu einem Überschreiten der von den Greifern ausgeübten Klemmkräften auf das Objekt 4. Jedoch lässt sich auch die zweite Ausführungsform der Erfindung in ihrem Anwendungsbereich durch die zusätzlichen Funktionen Kippen und Drehen des Objekts 4 erweitern.

In den Figuren 4 und 5 ist die dritte Ausführungsform des erfindungsgemäßen Greifsystems zeichnerisch dargestellt. Die dritte Ausführungsform des Greifsystems stellt eine erfindungsgemäße Kombination zwischen der zweiten Ausführungsform des Greifsystems und der ersten Ausführungsform des Greifsystems in der Funktion des Kippens und Drehens des Greifers 1 gleichzeitig mit dem Objekt 4 dar, womit auch sehr schwere Objekte 4 oder Objekte 4 mit geringer Festigkeit seiner Außenflächen durch Schwerpunktverlagerung mit dem erfindungsgemäßen Greifsystem vereinzelt, getrennt und transportiert werden können. Bei der dritten Ausführungsform besteht der Greifer wiederum aus einer ersten Greiferbacke 2 und einer zweiten Greiferbacke 3, die wie bei dem zweiten Ausführungsbeispiel gleichzeitig mit einem Druck bis zum Erzielen des objektspezifischen Haftreibschlusses zwischen den Greiferbacken und dem Objekt 4 auf die Oberfläche 8 und bspw. auf eine weitere frei zugängliche Seitenfläche 9 des Objekt 4 gedrückt werden.

Bei dem dritten Ausführungsbeispiel des Greifsystems sind jedoch die Greifflächen jeder einzelnen Greiferbacke, also der Greiferbacken 2 und 3, als umlaufende Riemen mit einem Riemenantrieb ausgebildet. Die in einem Winkel von bspw. 90 Grad zueinander angeordnete erste Greiferbacke 2 und die zweite Greiferbacke 3 üben neben den durch das Aufdrücken und die Zustellung der Riemen Klemmkräfte auf das Objekt 4 aus und zwar dadurch, dass die als umlaufende Riemen ausgebildeten Greiferbackenflächen der ersten Greiferbacke 2 und der zweiten Greiferbacke 3 mit der Riemeninnenseite 12 der ersten Greiferbacke und mit der Riemeninnenseite 13 der zweiten Greiferbacke mit der Bewegung dieser Innenseiten von Außen nach Innen in Richtung des Pfeiles 14 der ersten Greiferbacke 2 und in Richtung 15 der zweiten Greiferbacke 3 eine Kraft auf die Oberfläche 8 und eine weitere frei zugängliche Seitenfläche 9 des Objekts 4 in Richtung der inneren Winkelkante 16 eines von der ersten und der zweiten Greiferbacke gebildeten Winkels aus.

Wie bei dem ersten und bei dem zweiten Ausführungsbeispiel lässt sich auch bei dem dritten Ausführungsbeispiel der Winkel zwischen den beiden Greiferbacken 2 und 3 je nach den Anforderungen der Praxis, d. h. der Form der Objekte 4 durch entsprechende Maßnahmen, die hier nicht dargestellt sind, verändern, so dass der Winkel nur während der Greifdauer des Objekts 4 durch den Greifer 1 definiert fixiert ist. Ein durch die umlaufenden Riemeninnenseiten 12 und 13 in Richtung 14 und 15 erfasstes Objekt 4 wird nun mittels des Greifers und einer Steuerung durch einen nicht dargestellten Roboterarm um die Grundflächenkante 10 des Objekts 4 um 90 Grad gedreht. Die Grundflächenkante 10 begrenzt die frei zugängliche Seite 9 des Objekts 4 mit der dort aufliegenden zweiten Greiferbacke 3 also die Seitenfläche 9 zu der hier nicht dargestellten Unterlage 7, die bspw. aus einem Regalboden, einer Palettenfläche oder den durch andere fugenlos nebeneinander angeordnete Objekte gebildete Fläche gebildet wird. Durch das Drehen des Objektes 4 mittels des Greifers 1 kommt damit die zweite Greiferbacke 3 unter der neuen Standfläche des Objekts 4 zu liegen. D. h., dass der Schwerpunkt des Objektes 4 durch das Kippen des Greifers 1 und des Objekts 4 nunmehr auf der Greiferbacke 3 liegt und es deshalb vor dem Transport des Objektes zu einer sicheren Vereinzelung und Trennung des Objekts für den Transport beliebiger Objekte 4 kommen kann.

Die als Kippvorrichtung um die Grundflächenkante 10 dienende erste und zweite Greiferbacke 2 und 3 des Greifers 1 können dabei auf ihren Riemeninnenseiten 12 und 13 nicht nur mit einem Riemen versehen sein. In den Darstellungen nach den Figuren 5 und 6 sind die Greiferbacken 2 und 3 jeweils mit einem Flachriemen ausgerüstet, wobei nur ein einziger Flachriemen für die gesamte Fläche der Innenseiten 13 und 14 dargestellt ist. Die Flachriemen auf den Innenseiten 12 und 13 der Greiferbacken können jedoch auch aus zwei oder noch mehr Flachriemen zusammengesetzt sein, die in einer Ebene verlaufend angeordnet sind. Darüber hinaus können für Objekte 4, die Außenflächen, also die Oberfläche 8 oder weitere frei zugängliche Seitenflächen aufweisen, die Unregelmäßigkeiten in ihrer Erscheinungsform aufweisen, dadurch mit den Greiferbacken gut erfasst werden, dass die Greiferbackenflächen mehrere Rundriemen aufweisen, die nebeneinander in einer planen Ebene angeordnet sind. Durch die Anordnung mehrerer Rundriemen nebeneinander in der Ebene der Innenseiten 12 und 13 der Greiferbacken 2 und 3 entstehen zahlreiche Haftreibungsflächen bzw. -punkte, die es ermöglichen auch derartige Oberflächen von Objekten 4 sicher zu erfassen. Darüber hinaus ist es zweckmäßig, bei Greiferbackenflächen mit umlaufenden Riemen, d. h. also bei Flach- oder Rundriemen jedem einzelnen Riemen eine eigene Drehmomentbegrenzung z. B. in Form einer Rutschkupplung zuzuordnen. Die nebeneinander angeordneten und nicht dargestellten Antriebe für die Riemen und die ebenfalls nicht dargestellten Schleif- oder Rutschkupplungen dienen der Drehmomentbegrenzung für die Riemeninnenseiten 12 und 13 der umlaufenden Greiferbackenflächen, so dass nach dem Ergreifen des Objektes 4 durch den Greifer 1 bei Vorliegen eines Reibschlusses des Objektes 4 in dem Greifer die Innenseiten 12 und 13 der als Riemen ausgebildeten Greiferbacken teilweise oder ganz nicht mehr umlaufen.

Die geschilderte dritte Ausführungsform des Greifsystems stellt durch das Greifen mit umlaufenden Riemen ein sehr schonendes Verfahren bei geeigneten Gebinden dar. Besonders bei turmartigen aufeinander gestapelten Gebinden in Verbindung mit einer bahngesteuerten Wirkbewegung ergibt diese Vorrichtung und das Verfahren dazu gute Ergebnisse, da ein Umkippen des bereitgestellten Stapels von Massengütem auf diese Weise verhindert werden kann. Für die erste, zweite und dritte Ausführungsform sind außerdem nur wenige Wirkbewegungen zum Ergreifen und Transportieren des Objekts 4 erforderlich, dadurch werden gute Zykluszeiten für die Greifdauer erzielt. Eine Erhöhung des Reibwertes an den Flächen zwischen den Greiferbacken 2 und 3 und den Außenflächen des Objektes optimiert die Funktionalität des Greifprinzips. Eine Beeinflussung dieser Optimierung ergibt sich durch geeignete Werkstoffauswahl für die Greiferbacken und die Profilierung der Innenseiten 12 und 13 der Greiferbacken 2 und 3.

Bei dem ersten, zweiten und dritten Ausführungsbeispiel der Erfindung ist es möglich bei geringfügig vom Normalwinkel der Ober- und Seitenflächen zueinander abweichenden Winkeln des Objekts oder bei leicht nachgebenden Ober- oder Seitenflächen von Objekten für die Backeninnenflächen 5, 6, 12, 13 ein gewisses Spiel zur Anpassung und Nachstellung an die Winkelstellungen der Flächen des Objekts vorzusehen.

Je nach Beschaffenheit der vorgenannten Objekte kann es deshalb zweckmäßig sein, eine Befestigung der Greiferbacken am jeweiligen Arm des Greifers durch eine hier nicht dargestellte geeignete Verstellanordnung vorzusehen. Wobei die Verstellanordnung eine geringfügige Beweglichkeit der Greiferbacken zur zusätzlichen Ausrichtung der Greiferbacken erlaubt, dazu wird die Greiferbacke in eine zur jeweiligen Objektseite parallele Ebene ausgerichtet. Diese Ausrichtung der Greiferbacken erfolgt automatisch, indem beispielsweise jeweils eine gelenkige Verbindung zwischen dem rückseitigen Halter der Greiferbacke 2 und 3 und der Rückseite der Greiferbacken angefügt wird, sodass beim Ergreifen des Objekts diese Ausrichtung zwangsweise erfolgt.

Bei allen Ausführungsformen der vorliegenden Erfindung ist es möglich, die Greiferbackenflächen in ihrer Größe zu verändern, was jedoch zeichnerisch nur für das dritte Ausführungsbeispiel nach Figur 5 dargestellt ist. Dabei wird wenigstens eine Greiferbacke also bspw. in der Figur 5 die Greiferbacke 2 gegenüber einer anderen Greiferbacke also bspw. die Greiferbacke 3, die in einem Winkel zueinander definiert fixiert sind, unter Beibehaltung dieses Winkels zwischen den beiden Greiferbacken 2 und 3 verfahren. Die Länge der einen Greiferbacke, also in dem Ausführungsbeispiel gemäß Figur 5 die Greiferbacke 3, wird durch Verfahren der in einem definierten Winkel zu ihr angeordneten anderen Greiferbacke, also hier der Greiferbacke 2, in Längsrichtung verändert. Durch die Vergrößerung oder Verkleinerung der Greiferbackenfläche wird es möglich, den Greifer 1 an unterschiedliche Objektgrößen, wie Schachteln u. dgl. durch Verstellung der Greiferbackenlänge anzupassen. Darüber hinaus ist auch eine einstellbare Kraftbegrenzung der Riemenantriebe möglich, um eine weitere artikelspezifische Anpassung an die Erfordernisse der Objekte 4 zu erzielen.

### Bezugszeichenliste

- 1: Greifer
- 2: erste Greiferbacke
- 3: zweite Greiferbacke
- 4: Objekt
- 5: Innenseite
- 6: Innenseite
- 7: Unterlage
- 8: Oberfläche
- 9: Seitenfläche
- 10: Grundflächenkante
- 11: neue Unterlage
- 12: Riemeninnenseite
- 13: Riemeninnenseite
- 14: Richtung
- 15: Richtung
- 16: Innenkante

## Patentansprüche

1. Vorrichtung zum Ergreifen, Transport und einer erneuten Ablage von fugenlos gestapelten Objekten mittels eines Greifers, wobei die Objekte über frei zugängliche, nicht parallel zueinander liegende Griffflächen verfügen, und der Greifer (1) wenigstens zwei Greiferbacken (2, 3) aufweist, deren erste Greiferbacke (2) auf eine frei zugängliche erste Fläche in Form einer Oberfläche (8) des Objektes oder eine frei zugängliche Seitenfläche des Objekts und deren zweite Greiferbacke (3) auf eine zweite Fläche in Form einer weiteren frei zugänglichen Seitenfläche (9) des Objekts aufgelegt ist, und wobei die erste und die zweite Greiferbacke in einem Winkel zueinander angeordnet sind,
**dadurch gekennzeichnet, dass** die erste Greiferbacke (2) mit einem Druck bis zum Erzielen eines objektspezifischen Haftreibschlusses zwischen der ersten Greiferbacke und der ersten Fläche in Form einer Oberfläche (8) oder der frei zugänglichen Seitenfläche des Objekts angedrückt ist, dass die erste und die zweite Greiferbacke vor dem Beginn des Transport des Objekts als Kippvorrichtung um eine Drehachse für das zu transportierende Objekt dienen, dass eine Drehung um diejenige Grundflächenkante (10) des Objekts (4) erfolgt, die eine frei zugängliche Seitenfläche (9) des Objekts (4) mit der dort aufliegenden zweiten Greiferbacke (3) gegen eine Unterlage (7) begrenzt und damit nach der Drehung die zweite Greiferbacke (3) unter der neuen Standfläche des Objekts liegt.

2. Vorrichtung nach dem Oberbegriff des Anspruches 1,
**dadurch gekennzeichnet, dass** die erste Greiferbacke (2) auf der ersten Fläche des Objekts (4) und dass die zweite Greiferbacke (3) auf der zweiten Fläche des Objekts (4) jeweils mit einem Druck bis zum Erzielen des objektspezifischen Haftreibschlusses der Greiferbacken auf die erste Fläche in Form der Oberfläche (8) oder einer frei zugänglichen Seitenfläche des Objekts und auf die zweite Fläche in Form einer weiteren frei zugänglichen Seitenfläche (9) des Objekts (4) angedrückt sind, und
dass die erste Greiferbacke (2) und die zweite Greiferbacke (3) gleichzeitig auf die frei zugängliche Oberfläche (8) und Seitenfläche (9) des Objekts (4) aufgedrückt werden.

3. Vorrichtung nach dem Oberbegriff des Anspruches 1,
**dadurch gekennzeichnet,**
**dass** der Greifer (1) wenigstens zwei Greiferbacken (2, 3) aufweist, dass die Griffflächen jeder einzelnen Greiferbacke als umlaufende Riemen mit Riemenantrieb ausgebildet sind,
**dass** die erste Greiferbacke (2) auf der ersten Fläche des Objekts und
**dass** die zweite Greiferbacke (3) auf der zweiten Fläche des Objekts (4) jeweils mit einem Druck bis zum Erzielen des objektspezifischen Haftreibschlusses der Greiferbacken auf die erste Fläche in Form einer Oberfläche (8) oder einer frei zugänglichen Seitenfläche des Objekts und auf die zweite Fläche in Form einer weiteren frei zugänglichen Seitenfläche (9) des Objekts (4) angedrückt sind, dass ein solcher Klemmmechanismus für die zu ergreifenden Objekte (4) zwischen den Greifbacken (2, 3) vorgesehen ist, dass die Bewegung der umlaufenden Riemen auf den jeweiligen Innenseiten (12, 13) beider Greiferbackenflächen in Richtung einer inneren Winkelkante (16) des von den Greiferbacken (2, 3) gebildeten Winkels aufeinander zu erfolgt, dass die erste und die zweite Greiferbacke (2, 3) des Greifers (1) als Kippvorrichtung um eine Drehachse für das zu transportierende Objekt (4) dienen und dass die Drehung um diejenige Grundflächenkante (10) des Objekts (4) erfolgt, die eine frei zugängliche Seitenfläche (9) des Objekts (4) mit der dort aufliegenden zweiten Greiferbacke (3) gegen eine Unterlage (7) begrenzt und damit nach der Drehung die zweite Greiferbacke (3) unter der neuen Standfläche des Objekts liegt.

4. Verfahren zum Ergreifen und Transportieren und erneuten Ablegen von fugenlos gestapelten Objekten mittels eines Greifer, wobei die Objekte über frei zugängliche, nicht parallel zueinander liegende Griffflächen verfügen und ein Greifer (1) mit wenigstens zwei Greiferbacken (2, 3) vorgesehen wird, dessen erste Greiferbacke (2) auf eine frei zugängliche erste Fläche in Form einer Oberfläche (8) oder einer frei zugänglichen Seitenfläche des Objekts (4) und dessen zweite Greiferbacke (3) auf eine zweite Fläche in Form einer weiteren frei zugänglichen Seitenfläche (9) des Objekts (4) aufgelegt werden, wobei die erste und die zweite Greiferbacke (2, 3) zueinander in einem definierten Winkel angeordnet werden,
**dadurch gekennzeichnet, dass** die erste Greiferbacke (2) mit einem Druck bis zum Erzielen eines objektspezifischen Haftreibschlusses zwischen der Greiferbacke (2) und der ersten Fläche in Form der Oberfläche (8) oder einer frei zugänglichen Seitenfläche des Objekts (4) angedrückt wird, dass vor dem Beginn des Transportierens des Objekts (4) mit der ersten und der zweiten Greiferbacke (2, 3) das zu transportierende Objekt gekippt wird, dass das Drehen des Objekts (4) zum Kippen über eine Grundflächenkante als Achse ausgeführt wird und dass das Objekt (4) um diejenige Grundflächenkante (10) gedreht wird, die eine frei zugängliche Seitenfläche (9) des Objekts (4) mit der dort aufliegenden zweiten Greiferbacke (3) gegen eine Unterlage (7) begrenzt und damit nach dem Drehen die zweite Greiferbacke (3) unter der neuen Standfläche des Objekts (4) zu liegen kommt.

5. Verfahren nach dem Oberbegriff des Anspruches 4,
**dadurch gekennzeichnet, dass** die Greifflächen der einzelnen Greiferbacken (2, 3) mittels Antrieb als Riemen umlaufen, dass die erste Greiferbacke auf die erste Fläche des Objekts und die zweite Greiferbacke auf die zweite Fläche des Objekts gleichzeitig mit einem Druck bis zum Erzielen eines objektspezifischen Haftreibschlusses zwischen den Greiferbacken (2, 3) und den jeweiligen Objektoberflächen aufgedrückt werden,
dass ein solches Klemmverfahren für die zu ergreifenden Objekte (4) zwischen den Greiferbacken (2, 3) vorgesehen wird, dass sich die umlaufenden Riemen auf den jeweiligen Riemeninnenseiten (12, 13) der beiden Greiferbackenflächen in Richtung (14, 15) der inneren Winkelkante (16) des von der ersten und der zweiten Greiferbacke (2, 3) gebildeten und fixierten Winkels aufeinander zu bewegen, dass das Objekt (4) vor Beginn des Transportierens durch die erste und die zweite Greiferbacke (2, 3) des Greifers (1) um eine Drehachse gekippt wird und dass um diejenige Grundflächenkante (10) als Drehachse des Objekts (4) gekippt wird, die eine weitere frei zugängliche Seitenfläche (9) des Objekts mit der dort aufliegenden zweiten Greiferbacke (3) gegen eine Unterlage (7) begrenzt und damit nach dem Drehen die zweite Greiferbacke (3) unter der neuen Standfläche des Objekts (4) zu Liegen kommt.

6. Vorrichtung nach einem oder mehreren der Ansprüche 1 bis 3,
**dadurch gekennzeichnet,**
**dass** die erste und die zweite Greiferbacke (2, 3) des Greifers (1) während der Greifdauer des Objekts (4) zueinander in einem Winkel fixiert sind.

7. Vorrichtung nach einem oder mehreren der Ansprüche 1 bis 3, 6,
**dadurch gekennzeichnet,**
**dass** die Greifdauer aus den Abschnitten Vereinzelung, Trennung, Transport und Neupositionierung oder Neuverbundbildung des Objekts (1) besteht.

8. Vorrichtung nach einem oder mehreren der Ansprüche 1 bis 3, 6, 7,
**dadurch gekennzeichnet,**
**dass** der Winkel zwischen der ersten und der zweiten Greiferbacke (2, 3) eines Greifers (1) 90 Grad beträgt.

9. Vorrichtung nach einem oder mehreren der Ansprüche 1 bis 3, 6, 7,
**dadurch gekennzeichnet,**
**dass** beliebige definierte Winkel zwischen den Greiferbacken durch die Veränderbarkeit der Stellung der ersten und der zweiten Greiferbacke (2, 3) zueinander einstellbar sind.

10. Vorrichtung nach einem oder mehreren der Ansprüche 1 bis 3, 6 bis 9,
**dadurch gekennzeichnet,**
**dass** die Innenseite (5, 6, 12, 13) der Greiferbackenfläche der Greiferbacken (2, 3) in einer Ebene angeordnet ist.

11. Vorrichtung nach einem oder mehreren der Ansprüche 1 bis 3, 6 bis 10,
**dadurch gekennzeichnet,**
**dass** die Greiferbackenfläche aus einem Flachriemen besteht.

12. Vorrichtung nach einem oder mehreren der Ansprüche 1 bis 3, 6 bis 10,
**dadurch gekennzeichnet,**
**dass** sich die Greiferbackenfläche aus zwei oder mehreren Flachriemen zusammensetzt.

13. Vorrichtung nach einem oder mehreren der Ansprüche 1 bis 3, 6 bis 10,
**dadurch gekennzeichnet,**
**dass** die Greiferbackenfläche aus mehreren nebeneinander in einer Ebene angeordneten Rundriemen besteht.

14. Vorrichtung nach einem oder mehreren der Ansprüche 1 bis 3, 6 bis 13,
**dadurch gekennzeichnet,**
**dass** jedem Flach- oder Rundriemen eine eigene einzelne Drehmomentbegrenzung z. B. in Form einer eigenen Rutschkupplung zugeordnet ist.

15. Vorrichtung nach einem oder mehreren der Ansprüche 1 bis 3, 6 bis 14,
**dadurch gekennzeichnet,**
**dass** die Greiferbackenflächen in ihrer Größe veränderbar ausgeführt sind.

16. Vorrichtung nach einem oder mehreren der Ansprüche 1 bis 3, 6 bis 15,
**dadurch gekennzeichnet,**
**dass** wenigstens ein Greiferbacken gegenüber einer anderen in einem Winkel dazu angeordneten Greiferbacke unter Beibehaltung des Winkels zwischen diesen beiden Greiferbacken verfahrbar ausgebildet ist.

17. Vorrichtung nach einem oder mehreren der Ansprüche 1 bis 3, 6 bis 16,
**dadurch gekennzeichnet,**
**dass** die Länge der einen Greiferbacke durch Verfahren der in einem starren Winkel zu ihr angeordneten anderen Greiferbacke in Längsrichtung veränderbar ist.

18. Vorrichtung nach einem oder mehreren der Ansprüche 1 bis 3, 6 bis 17,
**dadurch gekennzeichnet,**
**dass** der Greifer (1) an einer Vorrichtung zum Bewegen des Greifers wie bspw. einem Arm eines Handhabungsautomaten oder eines Roboters bewegbar angeordnet ist und von diesem gesteuert ist.

19. Vorrichtung nach einem oder mehreren der Ansprüche 1 bis 3, 6 bis 18,
**dadurch gekennzeichnet,**
**dass** die Seitenflächen (9) und Oberflächen (8) des Objekts (4) Bestandteile eines bspw. quaderförmigen oder rechteckförmigen oder auch anders geformten Gegenstandes wie bspw. von Schachteln, Kisten, Stückgut und anderen Artikeln sind.

20. Verfahren nach einem oder mehreren der Ansprüche 4, 5,
**dadurch gekennzeichnet,**
**dass** die erste und die zweite Greiferbacke (2, 3) des Greifers (1) während der Greifdauer des Objekts (4) zueinander in einem definierten Winkel fixiert werden.

21. Verfahren nach einem oder mehreren der Ansprüche 4, 5, 20,
**dadurch gekennzeichnet,**
**dass** sich die Greifdauer über die Prozessführung der Teilabläufe Vereinzeln, Trennen, Transportieren und Neupositionieren oder Neuverbundbilden des Objekts (4) erstreckt.

22. Verfahren nach einem oder mehreren der Ansprüche 4, 5, 20, 21,
**dadurch gekennzeichnet,**
**dass** der Winkel zwischen der ersten und der zweiten Greiferbacke (2, 3) eines Greifers (1) 90 Grad beträgt.

23. Verfahren nach einem oder mehreren der Ansprüche 4, 5, 20, 21,
**dadurch gekennzeichnet,**
**dass** beliebige definierte Winkel zwischen den Greiferbacken (2, 3) durch die Veränderbarkeit der Stellung der ersten und der zweiten Greiferbacke zueinander eingestellt werden können.

24. Verfahren nach einem oder mehreren der Ansprüche 4, 5, 20 bis 23,
**dadurch gekennzeichnet,**
**dass** die Innenseite (5, 6, 12, 13) der Greiferbackenfläche der Greiferbacken (2, 3) in eine Ebene verläuft.

25. Verfahren nach einem oder mehreren der Ansprüche 4, 5, 20 bis 24,
**dadurch gekennzeichnet,**
**dass** die Greiferbackenfläche aus einem Flachriemen besteht.

26. Verfahren nach einem oder mehreren der Ansprüche 4, 5, 20 bis 24,
**dadurch gekennzeichnet,**
**dass** die Greiferbackenfläche aus zwei oder mehreren Flachriemen zusammensetzt wird.

27. Verfahren nach einem oder mehreren der Ansprüche 4, 5, 20 bis 24,
**dadurch gekennzeichnet,**
**dass** sich die Greiferbackenfläche aus mehreren nebeneinander in einer Ebene angeordneten Rundriemen zusammensetzt.

28. Verfahren nach einem oder mehreren der Ansprüche 4, 5, 20 bis 27,
**dadurch gekennzeichnet,**
**dass** jeder Flach- oder Rundriemen mit einer eigenen einzelnen Drehmomentbegrenzung z. B. in Form einer eigenen Rutschkupplung zusammenarbeitet.

29. Verfahren nach einem oder mehreren der Ansprüche 4, 5, 20 bis 28,
**dadurch gekennzeichnet,**
**dass** die Greiferbackenflächen in ihrer Größe verändert werden können.

30. Verfahren nach einem oder mehreren der Ansprüche 4, 5, 20 bis 29,
**dadurch gekennzeichnet,**
**dass** wenigstens ein Greiferbacken gegenüber einer anderen in einem Winkel dazu angeordneten Greiferbacke unter Beibehaltung des Winkels zwischen diesen beiden Greiferbacken verfahren werden kann.

31. Verfahren nach einem oder mehreren der Ansprüche 4, 5, 20 bis 30,
**dadurch gekennzeichnet,**
**dass** die Länge der einen Greiferbacke durch Verfahren der in einem starren Winkel zu ihr angeordneten anderen Greiferbacke in Längsrichtung verändert wird.

32. Verfahren nach einem oder mehreren der Ansprüche 4, 5, 20 bis 31,
**dadurch gekennzeichnet,**
**dass** der Greifer (1) durch eine Vorrichtung zum Bewegen des Greifers wie bspw. einem Arm eines Handhabungsautomaten oder eines Roboters bewegt wird und von diesem gesteuert wird.

33. Verfahren nach einem oder mehreren der Ansprüche 4, 5, 20 bis 32,
**dadurch gekennzeichnet,**
**dass** die Seitenflächen (9) und die Oberflächen (8) des Objekts (1) Bestandteile eines bspw. quaderförmigen oder rechteckförmigen oder auch anders geformten Gegenstandes wie bspw. von Schachteln, Kisten, Stückgut oder anderen Artikeln sind.

## Claims

1. A device for grasping, transporting, and redepositing continuously stacked objects using a gripper, the objects having freely accessible gripping faces which are not parallel to one another, and the gripper (1) having at least two gripper jaws (2, 3), whose first gripper jaw (2) is placed on a freely accessible first face in the form of a top face (8) of the object or a freely accessible lateral face of the object and whose second gripper jaw (3) is placed on a second face in the form of a further freely accessible lateral face (9) of the object, and the first and the second gripper jaws being situated at an angle to one another, **characterized in that** the first gripper jaw (2) is pressed with a pressure until an object-specific static friction lock is achieved between the first gripper jaw and the first face in the form of a top face (8) or the freely accessible lateral face of the object, the first and the second gripper jaws are used as a tilting device around an axis of rotation of the object to be transported before the beginning of the transport of the object, a rotation occurs around the base edge (10) of the object (4) which delimits a freely accessible lateral face (9) of the object (4) having the second gripper jaw (3) resting thereon to a substrate (7) and thus, after the rotation, the second gripper jaw (3) lies below the new base of the object.

2. The device according to the preamble of Claim 1,
**characterized in that** the first gripper jaw (2) is pressed against the first face of the object (4) and the second gripper jaw (3) is pressed against the second face of the object (4), each at a pressure to reach the object-specific static friction lock of the gripper jaws on the first face in the form of the top face (8) or a freely accessible lateral face of the object and on the second face in the form of a further freely accessible lateral face (9) of the object (4), and
the first gripper jaw (2) and the second gripper jaw (3) are pressed simultaneously against the freely accessible top face (8) and lateral face (9) of the object (4).

3. The device according to the preamble of Claim 1,
**characterized in that** the gripper (1) has at least two gripper jaws (2, 3), the gripper faces of each individual gripper jaw are implemented as revolving belts having a belt drive,
the first gripper jaw (2) is pressed against the first face of the object and the second gripper jaw (3) is pressed against the second face of the object (4) each at a pressure to reach the object-specific static friction lock of the gripper jaws on the first face in the form of a top face (8) or a freely accessible lateral face of the object and on the second face in the form of a further freely accessible lateral face (9) of the object (4), a clamping mechanism for the object (4) to be grasped is provided between the gripper jaws (2, 3) such that the movement of the revolving belts occurs on the particular interior sides (12, 13) of both gripper jaw faces in the direction of an inner angle edge (16) of the angle formed by the gripper jaws (2, 3) toward one another, the first and the second gripper jaws (2, 3) of the gripper (1) are used as a tilting device around an axis of rotation for the object (4) to be transported and the rotation occurs around the base edge (10) of the object (4) which delimits a freely accessible lateral face (9) of the object (4) having the second gripper jaw (3) lying thereon to a substrate (7) and thus, after the rotation, the second gripper jaw (3) lies below the new base of the object.

4. A method for grasping and transporting and redepositing continuously stacked objects using a gripper, the objects having freely accessible gripping faces which are not parallel to one another and a gripper (1) having at least two gripper jaws (2, 3) being provided, whose first gripper jaw (2) is placed on a freely accessible first face in the form of a top face (8) or a freely accessible lateral face of the object (4) and whose second gripper jaw (3) is placed on a second face in the form of a further freely accessible lateral face (9) of the object (4), the first and the second gripper jaws (2, 3) being situated at a defined angle to one another,
**characterized in that** the first gripper jaw (2) is pressed at a pressure to reach an object-specific static friction lock between the gripper jaw (2) and the first face in the form of the top face (8) or a freely accessible lateral face of the object (4), the object to be transported is tilted before beginning the transport of the object (4) using the first and the second gripper jaws (2, 3), the rotation of the object (4) for tilting is performed around a base edge as the axis, and the object (4) is rotated around the base edge (10) which delimits a freely accessible lateral face (9) of the object (4) having the second gripper jaw (3) lying thereon to a substrate (7) and thus, after the rotation, the second gripper jaw (3) comes to rest below the new base of the object (4).

5. The method according to the preamble of Claim 4,
**characterized in that** the gripping faces of the individual gripper jaws (2, 3) revolve as belts using a drive, the first gripper jaw is pressed against the first face of the object and the second gripper jaw is pressed against the second face of the object simultaneously at a pressure to reach an object-specific static friction lock between the gripper jaws (2, 3) and the particular object surfaces,
a clamping method for the object (4) to be grasped between the gripper jaws (2, 3) is provided such that the revolving belts on the particular belt interior sides (12, 13) of the two gripper jaw faces move toward one another in the direction (14, 15) of the inner angle edge (16) of the angle formed and fixed by the first and second gripper jaws (2, 3), the object (4) is tilted around an axis of rotation before beginning the transport by the first and the second gripper jaws (2, 3) of the gripper (1), and the object (4) is tilted around the base edge (10) as the axis of rotation, which delimits a further freely accessible lateral face (9) of the object having the second gripper jaw (3) lying thereon to a substrate (7) and thus, after the rotation, the second gripper jaw (3) comes to rest below the new base of the object (4).

6. The device according to one or more of Claims 1 through 3,
**characterized in that** the first and the second gripper jaws (2, 3) of the gripper (1) are fixed at an angle to one another during the gripping duration of the object (4).

7. The device according to one or more of Claims 1 through 3, 6,
**characterized in that** the gripping duration comprises the sections of isolation, separation, transport, and repositioning or forming a new group of the object (4).

8. The device according to one or more of Claims 1 through 3, 6, 7,
**characterized in that** the angle between the first and the second gripper jaws (2, 3) of a gripper (1) is 90°.

9. The device according to one or more of Claims 1 through 3, 6, 7,
**characterized in that** arbitrary defined angles may be set between the gripper jaws by the changeability of the position of the first and the second gripper jaws (2, 3) to one another.

10. The device according to one or more of Claims 1 through 3, 6 through 9,
**characterized in that** the interior side (5, 6, 12, 13) of the gripper jaw face of the gripper jaws (2, 3) is situated in a plane.

11. The device according to one or more of Claims 1 through 3, 6 through 10,
**characterized in that** the gripper jaw face comprises a flat belt.

12. The device according to one or more of Claims 1 through 3, 6 through 10,
**characterized in that** the gripper jaw face is composed of two or more flat belts.

13. The device according to one or more of Claims 1 through 3, 6 through 10,
**characterized in that** the gripper jaw face comprises multiple round belts situated neighboring one another in a plane.

14. The device according to one or more of Claims 1 through 3, 6 through 13,
**characterized in that** a separate individual torque limiter, in the form of a separate slip clutch, for example, is assigned to each flat or round belt.

15. The device according to one or more of Claims 1 through 3, 6 through 14,
**characterized in that** the gripper jaw faces are implemented as changeable in their size.

16. The device according to one or more of Claims 1 through 3, 6 through 15,
**characterized in that** at least one gripper jaw is implemented as movable in relation to another gripper jaw situated at an angle thereto while maintaining the angle between these two gripper jaws.

17. The device according to one or more of Claims 1 through 3, 6 through 16,
**characterized in that** the length of one gripper jaw is changeable by movement of the other gripper jaw, which is situated at a fixed angle thereto, in the longitudinal direction.

18. The device according to one or more of Claims 1 through 3, 6 through 17,
**characterized in that** the gripper (1) is situated movably on a device for moving the gripper, such as an arm of a handling machine or robot, and is controlled thereby.

19. The device according to one or more of Claims 1 through 3, 6 through 18,
**characterized in that** the lateral faces (9) and top faces (8) of the object (4) are components of a cuboid or rectangular object or also an object having another shape, for example, such as packets, boxes, piece goods, and other articles.

20. The method according to one or more of Claims 4, 5;
**characterized in that** the first and the second gripper jaws (2, 3) of the gripper are fixed at a defined angle to one another during the gripping duration of the object (4).

21. The method according to one or more of Claims 4, 5, 20,
**characterized in that** the gripping duration extends over the process control of the partial sequences of isolation, separation, transportation, and repositioning or forming a new group of the object (4).

22. The method according to one or more of Claims 4, 5, 20, 21,
**characterized in that** the angle between the first and the second gripper jaws (2, 3) of a gripper (1) is 90°.

23. The method according to one or more of Claims 4, 5, 20, 21,
**characterized in that** arbitrary defined angles between the gripper jaws (2, 3) may be set by the ability to change the position of the first and the second gripper jaws to one another.

24. The method according to one or more of Claims 4, 5, 20 through 23,
**characterized in that** the interior side (5, 6, 12, 13) of the gripper jaw face of the gripper jaws (2, 3) runs in a plane.

25. The method according to one or more of Claims 4, 5, 20 through 24,
**characterized in that** the gripper jaw face comprises a flat belt.

26. The method according to one or more of Claims 4, 5, 20 through 24,
**characterized in that** the gripper jaw face is composed of two or more flat belts.

27. The method according to one or more of Claims 4, 5, 20 through 24,
**characterized in that** the gripper jaw face comprises multiple round belts situated neighboring one another in a plane.

28. The method according to one or more of Claims 4, 5, 20 through 27,
**characterized in that** each flat or round belt works together with a separate individual torque limiter in the form of a separate slip clutch, for example.

29. The method according to one or more of Claims 4, 5, 20 through 28,
**characterized in that** the gripper jaw faces may be changed in their size.

30. The method according to one or more of Claims 4, 5, 20 through 29,
**characterized in that** at least one gripper jaw may be moved in relation to the another gripper jaw, situated at an angle thereto, while maintaining the angle between these two gripper jaws.

31. The method according to one or more of Claims 4, 5, 20 through 30,
**characterized in that** the length of one gripper jaw may be changed by moving the other gripper jaw, which is situated at a rigid angle thereto, in the longitudinal direction.

32. The method according to one or more of Claims 4, 5, 20 through 31,
**characterized in that** the gripper (1) is moved by a device for moving the gripper such as an arm of a handling machine or robot, for example, and is controlled thereby.

33. The method according to one or more of Claims 4, 5, 20 through 32,
**characterized in that** the lateral faces (9) and the top faces (8) of the object (1) are components of an object having a cuboid or rectangular or also a different shape, for example, such as packets, boxes, piece goods, or other articles.

## Revendications

1. Dispositif de préhension, de transport et d'une redépose d'objet empilés sans joint, au moyen d'un preneur, les objets disposant de surfaces de préhension librement accessibles qui ne sont pas parallèles, et le preneur (1) comportant au moins deux mâchoires de preneur (2, 3), dont la première mâchoire de preneur (2) est appuyée sur une première surface librement accessible sous la forme d'une surface supérieure (8) de l'objet ou sur une surface latérale librement accessible de l'objet et dont la deuxième mâchoire de preneur (3) est appuyée sur une deuxième surface sous la forme d'une autre surface latérale librement accessible (9) de l'objet, et la première et la deuxième mâchoires de preneur étant placées sous un angle mutuel, **caractérisé en ce que** la première mâchoire de preneur (2) est appuyée avec une pression jusqu'à l'obtention d'une adhérence par friction spécifique à l'objet entre la première mâchoire de preneur et la première surface sous la forme d'une surface supérieure (8) ou la surface latérale librement accessible de l'objet, **en ce que**, avant le début du transport de l'objet, la première et la deuxième mâchoires de preneur servent de dispositif de basculement autour d'un axe de rotation pour l'objet à transporter, **en ce qu'**une rotation est effectuée autour de l'arête de surface de base (10) de l'objet (4) qui délimite une surface latérale librement accessible (9) de l'objet (4) par la deuxième mâchoire de preneur (3) qui s'y appuie contre un support (7) et **en ce que**, après la rotation, la deuxième mâchoire de preneur (3) se situe sous la nouvelle surface d'assise de l'objet.

2. Dispositif selon le préambule de la revendication 1, **caractérisé en ce que** la première mâchoire de preneur (2) est pressée sur la première surface de l'objet (4) et **en ce que** la deuxième mâchoire de preneur (3) est pressée sur la deuxième surface de l'objet (4), chaque fois avec une pression jusqu'à l'obtention de l'adhérence par friction spécifique à l'objet des mâchoires de preneur sur la première surface sous la forme de la surface supérieure (8) ou d'une surface latérale librement accessible de l'objet et sur la deuxième surface sous la forme d'une autre surface latérale librement accessible (9) de l'objet (4) et **en ce que** la première mâchoire de preneur (2) et la deuxième mâchoire de preneur (3) sont pressées simultanément sur la surface supérieure (8) et sur la surface latérale (9) librement accessibles de l'objet (4).

3. Dispositif selon le préambule de la revendication 1, **caractérisé en ce que** le preneur (1) comporte au moins deux mâchoires de preneur (2, 3), **en ce que** les surfaces de préhension de chaque mâchoire de preneur individuelle sont conçues sous la forme de courroies en révolution, avec un entraînement par courroie, **en ce que** la première mâchoire de preneur (2) est pressée sur la première surface de l'objet et **en ce que** la deuxième mâchoire de preneur (3) est pressée sur la deuxième surface de l'objet (4), chaque fois avec une pression jusqu'à l'obtention de l'adhérence par friction spécifique à l'objet des mâchoires de preneur sur la première surface sous la forme d'une surface supérieure (8) ou d'une surface latérale librement accessible de l'objet et sur la deuxième surface sous la forme d'une autre surface latérale librement accessible (9) de l'objet (4), **en ce qu'**un mécanisme de serrage est prévu entre les mâchoires de serrage (2, 3) pour les objets (4) à prendre, de sorte que le déplacement des courroies en révolution sur les faces intérieures (12, 13) respectives des deux surfaces de mâchoires de preneur s'effectue en direction d'une arête angulaire intérieure (16) de l'angle formé par les mâchoires de preneur (2, 3), **en ce que** la première et la deuxième mâchoire de preneur (2, 3) du preneur (1) servent de dispositif de basculement autour d'un axe de rotation pour l'objet à transporter (4) et **en ce que** la rotation s'effectue autour de l'arête de surface de base (10) de l'objet (4) qui délimite une surface de base latérale librement accessible (9) de l'objet (4) par la deuxième mâchoire de preneur (3) qui s'y appuie contre un support (7), pour que de ce fait, après la rotation, la deuxième mâchoire de preneur (3) se situe sous la nouvelle surface d'assise de l'objet.

4. Procédé de préhension, de transport et d'une redépose d'objet empilés sans joint, au moyen d'un preneur, les objets disposant de surfaces de préhension librement accessibles qui ne sont pas parallèles, et un preneur (1) avec au moins deux mâchoires de preneur (2, 3) étant prévu, dont la première mâchoire de preneur (2) est appuyée sur une première surface librement accessible sous la forme d'une surface supérieure (8) ou sur une surface latérale librement accessible de l'objet (4) et dont la deuxième mâchoire de preneur (3) est appuyée sur une deuxième surface sous la forme d'une autre surface latérale librement accessible (9) de l'objet (4), la première et la deuxième mâchoires de preneur (2, 3) étant placées sous un angle mutuel défini, **caractérisé en ce que** la première mâchoire de preneur (2) est pressée avec une pression jusqu'à l'obtention d'une adhérence par friction spécifique à l'objet entre la première mâchoire de preneur (2) et la première surface sous la forme d'une surface supérieure (8) ou d'une surface latérale librement accessible de l'objet (4), **en ce que**, avant le début du transport de l'objet (4), l'objet à transporter est basculé à l'aide de la première et de la deuxième mâchoires de preneur (2, 3), **en ce que** la rotation de l'objet (4) est effectuée pour un basculement par l'intermédiaire de l'arête de surface de base en tant qu'axe et **en ce que** l'objet (4) est tourné autour de l'arête de surface de base (10) qui délimite une surface latérale librement accessible (9) de l'objet (4) par la deuxième mâchoire de preneur (3) qui s'y appuie contre un support (7) et **en ce que** de ce fait, après la rotation, la deuxième mâchoire de preneur (3) se situe sous la nouvelle surface d'assise de l'objet (4) .

5. Procédé selon le préambule de la revendication 4,
**caractérisé en ce que** les surfaces de préhension des mâchoires de preneur individuelles (2, 3) sont des courroies en révolution au moyen d'un entraînement, **en ce que** la première mâchoire de preneur est pressée sur la première surface de l'objet et **en ce que** la deuxième mâchoire de preneur est pressée sur la deuxième surface de l'objet, simultanément, avec une pression jusqu'à l'obtention d'une adhérence par friction spécifique à l'objet entre les mâchoires de preneur (2, 3) et les surfaces respectives de l'objet, **en ce qu'**on a prévu entre les mâchoires de preneur (2, 3) un procédé de serrage pour les objets (4) à prendre, de sorte que les courroies en révolution se déplacent l'une vers l'autre sur les surfaces intérieures respectives des courroies (12, 13) des deux surfaces des mâchoires de preneur, en direction (14, 15) de l'arête angulaire intérieure (16) de l'angle formé par la première et par la deuxième mâchoires de preneur (2, 3) et fixé, **en ce qu'**avant le début du transport, l'objet (4) est basculé par la première et la deuxième mâchoires de preneur (2, 3) du preneur (1) autour d'un axe de rotation et **en ce qu'**il est basculé autour de l'arête de surface de base (10) en tant qu'axe de rotation de l'objet (4), qui délimite une autre surface latérale librement accessible (9) de l'objet par la deuxième mâchoire de preneur (3), qui s'y appuie contre un support (7) et de ce fait, après la rotation, la deuxième mâchoire de preneur (3) vient se placer sous la nouvelle surface d'assise de l'objet (4).

6. Dispositif selon l'une ou plusieurs des revendications 1 à 3, **caractérisé en ce que** la première et la deuxième mâchoires de preneur (2, 3) du preneur (1) sont fixées sous un angle mutuel pendant la durée de préhension de l'objet (4).

7. Dispositif selon l'une quelconque des revendications 1 à 3, 6 **caractérisé en ce que** la durée de préhension consiste dans les sections désolidarisation, séparation, transport et repositionnement ou réassociation de l'objet (4).

8. Dispositif selon l'une quelconque ou plusieurs des revendications 1 à 3, 6, 7, **caractérisé en ce que** l'angle entre la première et la deuxième mâchoires de preneur (2, 3) d'un preneur (1) est de 90 degrés.

9. Dispositif selon l'une quelconque ou plusieurs des revendications 1 à 3, 6, 7, **caractérisé en ce que** des angles définis quelconques sont réglables entre eux, entre les mâchoires de preneur, par la capacité de modification de la position de la première et de la deuxième mâchoires de preneur (2, 3).

10. Dispositif selon l'une quelconque ou plusieurs des revendications 1 à 3, 6 à 9, **caractérisé en ce que** la face intérieure (5, 6, 12, 13) des surfaces de mâchoires de preneur des mâchoires de preneur (2, 3) est disposée dans un plan.

11. Dispositif selon l'une quelconque ou plusieurs des revendications 1 à 3, 6 à 10, **caractérisé en ce que** la surface des mâchoires de preneur consiste en une courroie plate.

12. Dispositif selon l'une quelconque ou plusieurs des revendications 1 à 3, 6 à 10, **caractérisé en ce que** la surface des mâchoires de preneur se compose de deux ou de plusieurs courroies plates.

13. Dispositif selon l'une quelconque ou plusieurs des revendications 1 à 3, 6 à 10, **caractérisé en ce que** la surface des mâchoires de preneur consiste en plusieurs courroies rondes placées côte à côte dans un plan.

14. Dispositif selon l'une quelconque ou plusieurs des revendications 1 à 3, 6 à 13, **caractérisé en ce qu'**à chaque courroie plate ou ronde est associée une propre limitation individuelle du couple de rotation, par exemple sous la forme d'un propre accouplement à glissement.

15. Dispositif selon l'une quelconque ou plusieurs des revendications 1 à 3, 6 à 14, **caractérisé en ce que** les surfaces des mâchoires de preneur sont réalisées en dimensions modifiables.

16. Dispositif selon l'une quelconque ou plusieurs des revendications 1 à 3, 6 à 15, **caractérisé en ce que** au moins une mâchoire de preneur est conçue de façon déplaçable par rapport à une autre mâchoire de preneur placée sous un angle par rapport à celle-ci, en conservant l'angle entre ces deux mâchoires de preneur.

17. Dispositif selon l'une quelconque ou plusieurs des revendications 1 à 3, 6 à 16, **caractérisé en ce que** la longueur de l'une des mâchoires de preneur est modifiable en direction longitudinale, par déplacement de l'autre mâchoire de preneur disposée sous un angle rigide défini par rapport à elle.

18. Dispositif selon l'une quelconque ou plusieurs des revendications 1 à 3, 6 à 17, **caractérisé en ce que** le preneur (1) est disposé de façon mobile sur un dispositif de déplacement du preneur, tel que par exemple un bras d'un automate de manipulation ou d'un robot et est commandé par ce dernier.

19. Dispositif selon l'une quelconque ou plusieurs des revendications 1 à 3, 6 à 18, **caractérisé en ce que** les surfaces latérales (9) et surfaces supérieures (8) de l'objet (4) sont des parties intégrantes d'un objet par exemple de forme quadratique ou rectangulaire ou d'une forme différente, tel que par exemple de boîtes, de caisse, de produits à l'unité et d'autres articles.

20. Procédé selon l'une quelconque ou plusieurs des revendications 4, 5, **caractérisé en ce que** la première et la deuxième mâchoires de preneur (2, 3) du preneur (1) sont fixées sous un angle mutuel pendant la durée de préhension de l'objet (4).

21. Procédé selon l'une quelconque ou plusieurs des revendications 4, 5, 20, **caractérisé en ce que** la durée de préhension s'étend sur la gestion du processus des cycles partiels désolidarisation, séparation, transport et repositionnement ou réassociation de l'objet (4).

22. Procédé selon l'une quelconque ou plusieurs des revendications 4, 5, 20, 21, **caractérisé en ce que** l'angle entre la première et la deuxième mâchoires de preneur (2, 3) d'un preneur (1) est de 90 degrés

23. Procédé selon l'une quelconque ou plusieurs des revendications 4, 5, 20, 21, **caractérisé en ce que** des angles définis quelconques sont réglables entre eux, entre les mâchoires de preneur (2, 3), par la capacité de modification de la position de la première et de la deuxième mâchoires de preneur.

24. Procédé selon l'une quelconque ou plusieurs des revendications 4, 5, 20 à 23, **caractérisé en ce que** la face intérieure (5, 6, 12, 13) des surfaces de mâchoires de preneur des mâchoires de preneur (2, 3) s'étend dans un plan.

25. Procédé selon l'une quelconque ou plusieurs des revendications 4, 5, 20 à 24, **caractérisé en ce que** la surface des mâchoires de preneur consiste en une courroie plate.

26. Procédé selon l'une quelconque ou plusieurs des revendications 4, 5, 20 à 24, **caractérisé en ce que** la surface des mâchoires de preneur se compose de deux ou de plusieurs courroies plates.

27. Procédé selon l'une quelconque ou plusieurs des revendications 4, 5, 20 à 24, **caractérisé en ce que** la surface des mâchoires de preneur se compose de plusieurs courroies rondes disposées côte à côte dans un plan.

28. Procédé selon l'une quelconque ou plusieurs des revendications 4, 5, 20 à 27, **caractérisé en ce que** chaque courroie plate ou ronde coopère avec une propre limitation individuelle du couple de rotation, par exemple sous la forme d'un propre accouplement à glissement.

29. Procédé selon l'une quelconque ou plusieurs des revendications 4, 5, 20 à 28, **caractérisé en ce que** les surfaces des mâchoires de preneur peuvent être modifiées dans leurs dimensions.

30. Procédé selon l'une quelconque ou plusieurs des revendications 4, 5, 20 à 29, **caractérisé en ce qu'**au moins une mâchoire de preneur peut être déplacée par rapport à une autre mâchoire de preneur placée sous un angle par rapport à celle-ci, en conservant l'angle entre ces deux mâchoires de preneur.

31. Procédé selon l'une quelconque ou plusieurs des revendications 4, 5, 20 à 30, **caractérisé en ce que** la longueur de l'une des mâchoires de preneur est modifiée en direction longitudinale, par déplacement de l'autre mâchoire disposée sous un angle rigide par rapport à elle.

32. Procédé selon l'une quelconque ou plusieurs des revendications 4, 5, 20 à 31, **caractérisé en ce que** le preneur (1) est déplacé par un dispositif de déplacement du preneur, tel que par exemple un bras d'un automate de manipulation ou d'un robot et est commandé par ce dernier.

33. Procédé selon l'une quelconque ou plusieurs des revendications 4, 5, 20 à 32, **caractérisé en ce que** les surfaces latérales (9) et les surfaces supérieures (8) de l'objet (1) sont des parties intégrantes d'un objet par exemple de forme quadratique ou rectangulaire ou d'une autre forme, tel que par exemple de boîtes, de caisses, de produits à l'unité ou d'autres articles.
